# EUROPEAN PATENT APPLICATION

(11) **EP 1 681 836 A1**
(43) Date of publication of application: **19.07.2006**
(21) Application number: 05000726.9
(22) Date of filing: 14.01.2005
(51) Int. Cl.: H04M 1/02, G06F 3/02

(54) **Telephone in a keyboard**

(71) Applicant: Tsai, Mong-Tsang, Jhongshan District, Taipei City 104, Taiwan (TW)
(72) Inventor: Tsai, Mong-Tsang, Jhongshan District, Taipei City 104, Taiwan (TW)
(74) Representative: Casalonga, Axel

(57) **Abstract**

A phone apparatus combined with keyboard comprising a keyboard (15). A sound transmission device (8) and a phone line socket (10) are disposed on one side of the keyboard. The phone line socket is connected to a phone module in the keyboard, resulting in having both a computer operation and a communicated function to be convenient for the user and increase the work efficiency, thereby preventing the shoulder hurt, the neck hurt, and the vertebra hurt from the operation used by the convention telephone.

## Description

### BACKGROUND OF THE INVENTION

### Field of the Invention

The present invention relates to a phone apparatus combined with keyboard, and more particularly, to an apparatus integrated the key operation with the dial phone, thereby having the computer operation and communicated function.

### Description of the Related Art

Computers and word processors are more and more prevalent in offices and homes. The user usually operates the computer by both hands. The telephone is usually positioned beside the keyboard or by two sides of the keyboard. When the telephone is incoming or the user wants to use the telephone, the user needs to stop the computer operation to answer the phone, which is not convenient for the user, thereby reducing the working effective and causing the shoulder hurt, the neck hurt, and the vertebra hurt while operating the computer and using the telephone. Moreover, in order to reduce the office cost, the office desk can not occupy too much space. The conventional telephone usually occupies too much space on the desk. It is inconvenient for the user while operating the computer and using the telephone.

In view of this, the present invention provides a phone apparatus combined with keyboard to overcome the above-mentioned disadvantages.

### SUMMARY OF THE INVENTION

The present invention provides a phone apparatus combined with keyboard, which integrates the key operation with the dial phone, thereby having the integrated functional convenience and increasing the working efficiency.

The present invention also provides a phone apparatus combined with keyboard, which prevents the shoulder hurt, the neck hurt, and the vertebra hurt from the operation.

According to a preferred embodiment of the present invention, a phone apparatus combined with keyboard is provided, comprising a keyboard. A sound transmission device and a phone line socket are disposed on one side of the keyboard. The phone line socket is connected to a phone module inside the keyboard.

According to another embodiment of the present invention, a phone apparatus combined with keyboard is provided, comprising a phone apparatus. A sound transmission device and a phone line socket are disposed on one side of the phone apparatus. The phone line socket is connected to a phone module. The phone apparatus is used with a keyboard, thereby having both a computer operation and a communicated function.

The objectives of the present invention will become obvious to those of ordinary skill in the art after reading the following detailed description of the preferred embodiment.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a perspective view of the structure of the phone apparatus combined with keyboard according to a first embodiment of the present invention;
Fig. 1A shows the structure of the phone apparatus when the earphone/microphone apparatus is received in the keyboard according to a first embodiment of the present invention;
Fig. 1B shows the structure of the phone apparatus when the earphone/microphone apparatus is pulled from the keyboard according to a first embodiment of the present invention;
Fig. 2 is a perspective view of the structure of the phone apparatus combined with keyboard according to a second embodiment of the present invention;
Fig. 2A shows the structure of the phone apparatus when the earphone/microphone apparatus is received in the keyboard according to a second embodiment of the present invention;
Fig. 2B shows the structure of the phone apparatus when the earphone/microphone apparatus is pulled from the keyboard according to a second embodiment of the present invention;
Fig. 3 is a perspective view of the structure of the phone apparatus combined with keyboard according to a third embodiment of the present invention; and
Fig. 4 is a perspective view of the structure of the phone apparatus combined with keyboard according to a fourth embodiment of the present invention.

### DETAILED DESCRIPTION OF THE PREFERRED EMBODIMENTS

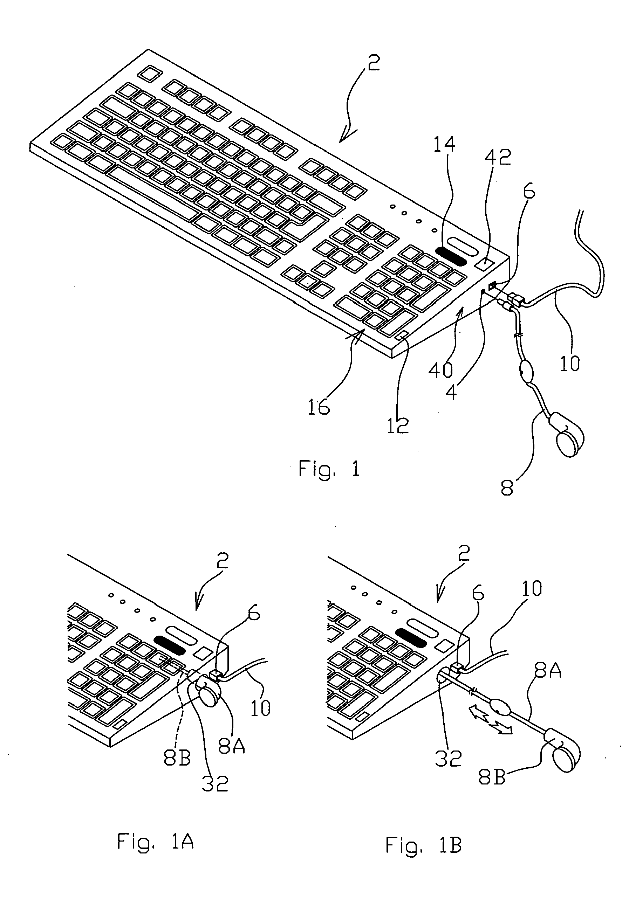

Referring to Fig. 1, the present invention provided a phone apparatus combined with keyboard, comprising a keyboard 2. A sound transmission device 40 and a phone line socket 6 are disposed on one side of the keyboard 2. The sound transmission device 40 comprises a sound transmission socket 4 for connecting with an earphone/microphone 8 to communicate. The phone line socket 6 is provided for connecting with a phone line 10 (or a fixed network line). The phone line socket 6 is connected to a phone module (not shown in the drawing) in the keyboard 2, thereby having the function of phone operation. The keyboard 2 further comprises a speaker hole 12, a phone switching key 14, and a multifunction key module 16 disposed thereon. The keyboard 2 is switched to be a keyboard 2 with the phone function key via the phone switching key 14. The multifunction key module 16 comprises the function keys consisting of extension, transmission, numeral key and hold.

The sound transmission device 40 further comprises a wireless sound transceiver 42 disposed thereon. The wireless sound transceiver 42 transmits the sound of reverse content by the wireless transmission way (for examples, the infrared ray transmission, the blue teeth system, etc.). The user receives the phone by the wireless earphone/microphone (not shown in the drawings) and the wireless sound transceiver 42. The earphone/microphone 8 also is fixedly positioned inside the keyboard 2, as shown in Figs. 1A and 1B. A receiving hole 32 is disposed on one side of the keyboard 2. One end of an earphone/microphone 8A is fixedly positioned inside the keyboard 2, and connected with a resilient retractable apparatus (not shown in the drawings, such as the conventional resilient retractable apparatus). When the phone is used, the earphone portion 8B of earphone/microphone 8A is pulled out by the hand of the user and positioned in the ear of the user. After finished the phone, the earphone/microphone 8A is automatically retracted to the keyboard 2 due to the resilient retractable apparatus, resulting in leaving the earphone portion 8B in the receiving hole 32 of the keyboard 2 to achieve the convenience purpose.

When the user uses the computer, both hands of the user operate on the keyboard. In the meantime, when the phone is coming, the user only needs to hit the phone switching key 14 to communicate in time by inserting the earphone/microphone 8 into the sound transmission socket 4 without stopping the computer operation when answered the phone. Also, it doesn't need to put down the telephone to search the data from the computer while communicating. Therefore, the user can answer the phone and operate the computer at the same time, thereby greatly increasing the working effective. When using the dialing function of the present invention, the user only needs to hit the phone switching key 14 to convert to the phone key module from the computer key module, resulting in having the numeral key of the multifunction key module 16 to be the dialing key. The communication is made by hitting the dialing key via the phone line 10. The multifunction key module 16 also comprises the function keys consisting of extension, transmission, and hold. The user can use the present invention having the keyboard operation and the phone function in order to reduce the space cost of office. If the user doesn't want to use the earphone/microphone 8, the speaker hole 12 on the keyboard 2 can be used to communicate for speakerphone.

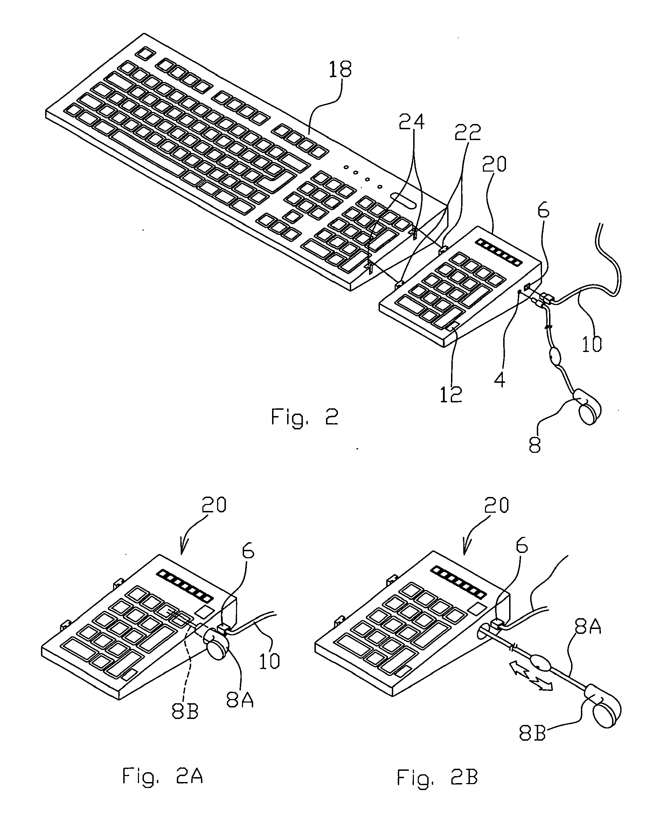

Next, referring to Fig. 2, a second embodiment of the present invention is shown. The keyboard 18 is separated from the phone apparatus 20. The phone apparatus 20 comprises two hooked-tenon portions 22, and two slots 24 are formed on one corresponding side of the keyboard 18. Two hooked-tenon portions 22 are hooked with two slots 24 to connect with the keyboard 18. The user can easily replace the broken phone apparatus 20 or the different shape of phone apparatus 20. The phone apparatus 20 comprises a sound transmission device 40 and a phone line socket 6 disposed thereon. The phone line socket 6 is connected with the phone line 10 (or a fixed network line), and one end of the phone line 10 is disposed in the phone module (not shown in the drawings). The sound transmission device 40 comprises a sound transmission socket 4 for connecting with the earphone/microphone 8 to communicate. The phone apparatus 20 comprises further comprises a speaker hole 12 and a multifunction key module 16 disposed thereon. The multifunction key module 16 comprises the function keys consisting of extension, transmission, numeral key and hold, thereby connecting an external module phone apparatus 20 to provide more convenient for the user.

In addition, the sound transmission device 40 further comprises a wireless sound transceiver 42 disposed thereon. The wireless sound transceiver 42 transmits the sound of reverse content by the wireless transmission way (for examples, the infrared ray transmission, the blue teeth system, etc.). The user receives the phone by the wireless earphone/microphone (not shown in the drawings) and the wireless sound transceiver 42. The earphone/microphone 8 also is fixedly positioned in the keyboard 2, as shown in Figs. 2A and 2B. A receiving hole 32 is disposed on one side of the keyboard 2. One end of an earphone/microphone 8A is fixedly positioned inside the keyboard 2, and connected with a resilient retractable apparatus (not shown in the drawings, such as the conventional resilient retractable apparatus). When the phone is used, the earphone portion 8B of earphone/microphone 8A is pulled out by the hand of the user and positioned in the ear of the user. After finished the phone, the earphone/microphone 8A is automatically retracted to the keyboard 2 due to the resilient retractable apparatus, resulting in leaving the earphone portion 8B in the receiving hole 32 of the keyboard 2 to achieve the convenience purpose.

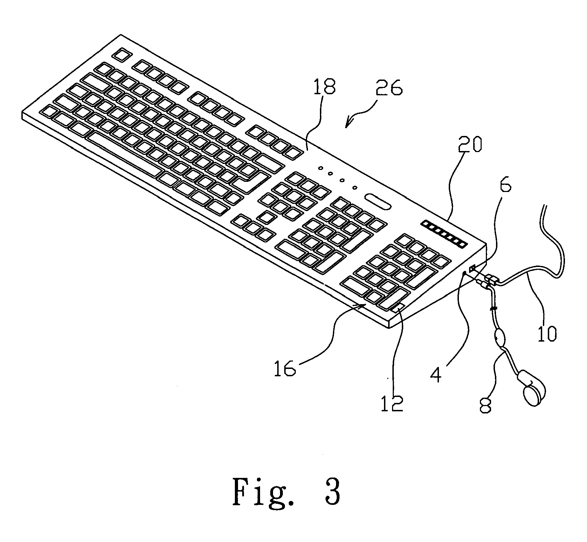

Referring to Fig. 3, a third embodiment of the present invention is shown, integrating the keyboard 18 with the phone apparatus 20 to be an integrated keyboard 26, resulting in respectively using the key on the keyboard 18 from the key on the phone apparatus 20.

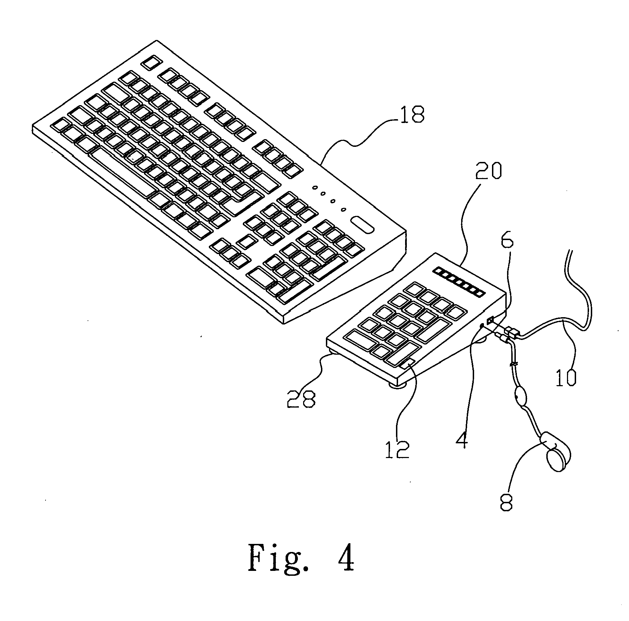

Referring to Fig. 4, a fourth embodiment of the present invention is shown. The keyboard 18 is separated the phone apparatus 20. The phone apparatus 20 comprises at least one sucker for fixedly attaching on the desk and positioning beside the keyboard 18, thereby using the keyboard 18 and the phone apparatus 20 simultaneously.

According to the present invention, a phone apparatus combined with keyboard is provided, integrating the keyboard with the phone apparatus. The user can answer the phone and operate the computer at the same time, thereby greatly increasing the working effective.

The embodiment above is only intended to illustrate the present invention; it does not, however, to limit the present invention to the specific embodiment. Accordingly, various modifications and changes may be made without departing from the spirit and scope of the present invention as described in the following claims.

## Claims

1. A phone apparatus combined with a keyboard, comprising:
a keyboard having a sound transmission device and a phone line socket on one side of the keyboard, and wherein one end of said phone line socket is connected to a phone module in said keyboard, and another end of said phone is connected with a phone line or a fixed network line.

2. The phone apparatus combined with the keyboard of claim 1, wherein said sound transmission device comprises a sound transmission socket for connecting with an earphone/microphone apparatus.

3. The phone apparatus combined with the keyboard of claim 1, wherein said keyboard further comprises a speaker hole, a phone switching key, and a multifunction key module disposed thereon, and wherein said multifunction key module comprises the function keys consisting of extension, transmission, number key and hold.

4. The phone apparatus combined with the keyboard of claim 1, wherein said sound transmission device comprises a wireless sound transceiver.

5. The phone apparatus combined with the keyboard of claim 1, wherein a receiving hole is disposed on one side of said keyboard, and one end of said earphone/microphone apparatus is connected with a resilient retractable apparatus and fixedly positioned inside said keyboard passing though said receiving hole.

6. A phone apparatus combined with a keyboard, comprising:
a phone apparatus having a sound transmission device and a phone line socket on one side of said phone apparatus, and wherein said phone line socket is connected to a phone module, and wherein said phone apparatus is used with a keyboard, thereby having both a computer operation and a communicated function.

7. The phone apparatus combined with the keyboard of claim 6, wherein said sound transmission device comprises a sound transmission socket for connecting with ant earphone/microphone apparatus.

8. The phone apparatus combined with the keyboard of claim 6, wherein said phone apparatus is engaged or integrated with said keyboard.

9. The phone apparatus combined with the keyboard of claim 6, wherein said phone apparatus comprises a multifunction key module, and said multifunction key module comprises the function keys consisting of extension, transmission, number key and hold, and said phone apparatus comprises at least one sucker.

10. The phone apparatus combined with the keyboard of claim 6, wherein said sound transmission device comprises a wireless sound transceiver.

11. The phone apparatus combined with the keyboard of claim 6, wherein a receiving hole is disposed on one side of said keyboard, and one end of the earphone/microphone apparatus is connected with a resilient retractable apparatus and fixedly positioned inside said keyboard passing though said receiving hole.
